# EUROPÄISCHE PATENTSCHRIFT

(11) **EP 2 184 590 B1**
(45) Veröffentlichungstag und Bekanntmachung des Hinweises auf die Patenterteilung: **22.08.2012**
(21) Anmeldenummer: 08168761.8
(22) Anmeldetag: 10.11.2008
(51) Int. Cl.: G01F 13/00, G01F 11/00, G01G 13/02

(54) **Dosiervorrichtung mit einer Wechselvorrichtung für Dosiereinheiten**
Dosing device with an exchangeable device for dosing units
Dispositif de dosage doté d'un dispositif de changement pour unités de dosage

(43) Veröffentlichungstag der Anmeldung: 12.05.2010
(73) Patentinhaber: Mettler-Toledo AG, 8606 Greifensee (CH)
(72) Erfinder: Lüchinger, Paul, 8610, Uster (CH)

(56) Entgegenhaltungen:
- EP-A- 1 930 702
- EP-A- 1 947 427
- EP-A- 1 959 243
- EP-A- 1 959 244
- DE-A1- 19 841 478

## Beschreibung

Die vorliegende Erfindung bezieht sich auf eine Dosiervorrichtung mit einer Wechselvorrichtung für Dosiereinheiten oder Funktionseinheiten.

Dosiervorrichtungen für pulver- oder pastenförmiges Dosiergut finden insbesondere beim Dosieren kleiner Mengen mit hoher Präzision in kleine Zielgefässe Verwendung. Häufig sind solche Zielgefässe auf einer Waage platziert, um die Menge des aus der Dosiervorrichtung ausgetragenen Dosierguts zu verwiegen, so dass dieses anschliessend bestimmungsgemäss weiter verarbeitet werden kann. Das Dosiergut befindet sich beispielsweise in einer Dosiereinheit, welche im Wesentlichen ein Entnahmegefäss und einen Dosierkopf aufweist. Im Dosierkopf ist ein Dosierorgan, beispielsweise ein Schieber angeordnet, welcher eine Auslassöffnung freigibt, sobald er betätigt wird. Durch die mit dem Entnahmegefäss verbundene Auslassöffnung kann das Dosiergut hernach in ein unterhalb der Auslassöffnung angeordnetes Zielgefäss fliessen. Der Schieber ist vorzugsweise mit einer von der Dosiereinheit getrennten Antriebsvorrichtung koppelbar.

Häufig werden Dosiervorrichtungen der vorgenannten Art auch zum Herstellen von Mischungen aus mehreren Einzelsubstanzen verwendet. Vorzugsweise ist deshalb eine Wechselvorrichtung vorhanden, mittels welcher die einzelnen Dosiereinheiten mit den Einzelsubstanzen automatisiert in die Dosiervorrichtung eingesetzt, beziehungsweise aus dieser entfernt werden können.

In der EP 1 947 427 A1 wird eine Dosiervorrichtung offenbart, bei welcher mehrere Dosiereinheiten in einer Halterung angeordnet sind. Mittels einer Beschickungsvorrichtung, beispielsweise einem Industrieroboter, können die Dosiereinheiten zwischen der Halterung und der Aufnahmevorrichtung der Dosiervorrichtung befördert werden. Ein gravierender Nachteil dieser Lösung ist aufgrund der Anordnung einzelner voneinander getrennter Module der grosse Flächenbedarf der gesamten Anlage, welcher auch als Footprint bezeichnet wird. Gerade in Labors, insbesondere in Arbeitskabinen mit Absaugvorrichtungen, spielt der Flächenbedarf eines darin verwendeten Gerätes eine zentrale Rolle, da viele dieser Kabinen bei Anwendern installiert sind und deshalb eine beschränkte verfügbare Fläche gegeben ist. Ferner ist bei der Installation einer solchen Gesamtanlage mit einem hohen Mass an Justier- Verkabelungs- und Programmierungsaufwand zwischen der Dosiervorrichtung, der Beschickungsvorrichtung und der Halterung zu rechnen.

Diesen Nachteilen tragen zwei Ausführungen einer Dosiervorrichtung mit einer Wechselvorrichtung teilweise Rechnung, welche in der EP 1 959 244 A1 offenbart sind. Die erste Ausführung weist eine linear verschiebbare Halterung für mehrere Dosiereinheiten auf. Die zweite Ausführung weist eine ringförmig ausgebildete Halterung auf, welche um die Dosiervorrichtung drehbar angeordnet ist. Je nach Auswahl, beispielsweise durch eine in der Dosiervorrichtung vorgegebene Rezeptur, werden nacheinander die einzelnen Dosiereinheiten ihrer Platznummer entsprechend verschoben, mit der Antriebsvorrichtung gekoppelt und die nach der Rezeptur vorgegebenen Substanzmengen in ein Zielgefäss ausdosiert. Jedoch ist immer noch ein relativ grosser Flächenbedarf vorhanden, da die Wechselvorrichtung in geringer Höhe über dem Grund angeordnet ist und die Fläche unterhalb der Wechselvorrichtung deshalb nicht genutzt werden kann.

Die vorangehend beschriebenen Ausführungen einer Dosiervorrichtung mit einer Wechselvorrichtung sind einfach herstellbar, haben einen kleinen Flächenbedarf und können dank der Integration der Wechselvorrichtung ohne grossen Installationsaufwand in Betrieb genommen werden.

Um eine Kontamination der Umgebung beziehungsweise der Substanz zu vermeiden, sollte jedoch der Abstand der Auslassöffnung einer Dosiereinheit zur Einfüllöffnung eines auf der Waagschale der Wägezelle befindlichen Zielgefässes möglichst klein sein. Dies ist insbesondere bei der Handhabung von toxischen oder hoch reaktiven Substanzen von hoher Wichtigkeit. Vorzugsweise ragt während des Dosiervorganges sogar ein Teil der Dosiereinheit mit deren am unteren Ende angeordneten Auslassöffnung in die Einfüllöffnung hinein, so dass der Innenrandbereich des Zielgefässes nicht mit Dosiergut beschmutzt ist. Dies ist mit den in der EP 1 959 244 A1 offenbarten Dosiervorrichtungen nicht möglich. Um dies zu erreichen, müsste die gesamte Wechselvorrichtung in der Höhe verstellbar sein. Das Gewicht der Summe der in die Wechselvorrichtung einsetzbaren Dosiereinheiten müsste dadurch in vertikaler Richtung auf und ab bewegt werden. Die hohe, zu bewegende Masse kann dementsprechend auch die Geschwindigkeit der einzelnen Schritte beim Wechselvorgang der Dosiereinheiten beeinflussen und zu erhöhten Vibrationen führen. Ferner muss der gesamte Raum, in welchem sich die Wechselvorrichtung bewegen kann, von weiteren Gegenständen und Teilen der Vorrichtung freigehalten werden. Des Weiteren kann während des Dosiervorgangs die Halterung nicht bewegt werden.

Die Aufgabe der vorliegenden Erfindung besteht darin, eine Dosiervorrichtung zu schaffen, deren Flächenbedarf, beziehungsweise deren freizuhaltender Raum gering ist und bei welcher ein rascher Wechsel und ein rasches Bestücken von Dosiereinheiten beziehungsweise Funktionseinheiten möglich ist.

Diese Aufgabe wird mit einer Dosiervorrichtung mit einer Wechselvorrichtung gelöst, welche die im unabhängigen Patentanspruch angegebenen Merkmale aufweist.

Eine Dosiervorrichtung weist einen Grundrahmen, mindestens eine Aufnahmevorrichtung zur Aufnahme einer, in die Aufnahmevorrichtung einsetzbaren Dosiereinheit oder Funktionseinheit und mindestens eine Antriebsvorrichtung auf. Wenn eine Dosiereinheit oder Funktionseinheit in die Aufnahmevorrichtung eingesetzt ist, kann diese mit der Antriebsvorrichtung gekoppelt werden. Bezogen auf die Betriebsstellung der Dosiervorrichtung, ist in einer oberen horizontalen Ebene des Grundrahmens eine Halterung angeordnet und mit demselben verbunden. Die Halterung weist mehrere horizontal nebeneinander angeordnete Halteplätze für Dosiereinheiten oder Funktionseinheiten auf, wobei die Halteplätze relativ zum Grundrahmen horizontal verschiebbar sind. In einer unteren horizontalen Ebene des Grundrahmens ist ferner eine Wägezelle angeordnet, welche einen Lastaufnehmer zur Aufnahme eines Zielgefässes aufweist.

Erfindungsgemäss ist jeder Halteplatz relativ zum Grundrahmen horizontal zu einer Übergabestelle Verchiebbar und die Dosiervorrichtung beinhaltet eine Wechselvorrichtung, mittels welcher die Aufnahmevorrichtung relativ zum Grundrahmen horizontal verschiebbar ist. Durch die horizontale Verschiebung kann an der Übergabestelle mittels der Aufnahmevorrichtung eine Dosiereinheit oder Funktionseinheit aus dem ihr zugeordneten Halteplatz entfernt und in die Aufnahmevorrichtung aufgenommen, beziehungsweise aus der Aufnahmevorrichtung entfernt und in den ihr zugeordneten Halteplatz aufgenommen werden. Des Weiteren ist mittels der Wechselvorrichtung die Aufnahmevorrichtung zusammen mit der Antriebsvorrichtung relativ zum Grundrahmen vertikal zur Einfüllöffnung eines auf dem Lastaufnehmer aufgelegten Zielgefässes hin, beziehungsweise von der Einfüllöffnung des Zielgefässes zum ihr zugeordneten Halteplatz hin, verschiebbar.

Der Aufbau und die Funktion einer Dosiereinheit wurden bei der vorangehenden Würdigung des Standes der Technik bereits erklärt und beschrieben. Selbstverständlich können an Stelle einer oder mehrerer Dosiereinheiten auch Funktionseinheiten mit verschiedenen Funktionen verwendet werden. Das Konzept solcher, in eine Dosiervorrichtung einsetzbarer Funktionseinheiten ist im Detail in der europäischen Patentanmeldung EP 1 959 243 A1 dargestellt, deren Inhalt hiermit vollumfänglich in die vorliegende Anmeldung mit aufgenommen wird. Besonders erwähnenswert sind Funktionseinheiten, welche eine Versorgung von aussen erfahren, beispielsweise eine Pumpeinheit oder Ventileinheit, die mittels einer Versorgungsleitung mit einem externen, mit einer Flüssigkeit oder einem Gas versehenen Reservoir verbunden sind. Dadurch ist eine kontinuierliche Versorgung der Funktionseinheit mit einem fliessfähigen Fluid möglich.

Die Wechselvorrichtung weist somit mindestens eine horizontale Linearführung als Verbindungselement zwischen der Aufnahmevorrichtung und der Antriebsvorrichtung und eine vertikale Linearführung zwischen der Einheit aus Antriebsvorrichtung und Aufnahmevorrichtung und dem Grundrahmen auf. Dazu gehören ferner zu jeder Linearführung eine Antriebseinheit und zum Steuern der Antriebseinheiten eine Steuerung. Wie vorangehend beschrieben, dienen die horizontalen Bewegungen primär dem Übergabevorgang der Dosiereinheit oder Funktionseinheit zwischen der Aufnahmevorrichtung und dem Halteplatz. Dies schliesst aber nicht aus, dass die horizontale Bewegung auch für untergeordnete Bedürfnisse, beispielsweise der Ausrichtung der Dosiereinheit oder Funktionseinheit zum Zielgefäss dienen kann. Die vertikalen Bewegungen dienen primär dem Transport der Dosiereinheit oder Funktionseinheit vom Halteplatz zum Zielgefäss und wieder zurück. Dies schliesst wie bereits zur horizontalen Bewegung erläutert, auch nicht aus, dass vertikale Bewegungen für weitere Bedürfnisse, beispielsweise kurzhubige Entriegelungs-, beziehungsweise Verriegelungsbewegungen verwendet werden können.

Vorzugsweise weist die Halterung mindestens zwei Halteplätze auf und ist relativ zum Grundrahmen linear verschiebbar oder drehbar ausgebildet. Idealerweise ist die Position jedes Halteplatzes in einer elektronischen Speichereinheit der Dosiervorrichtung eingespeichert, so dass ein in einem Prozessormodul der Dosiervorrichtung ausführbares Betriebsprogramm den gewünschten Halteplatz findet und zu einer weiter unten beschriebenen Übergabestelle drehen kann. In dieser Speichereinheit können selbstverständlich auch Daten der im Halteplatz eingesetzten Dosiereinheit eingespeichert sein. Sofern im Bereich der Halterung eine elektronische Lesevorrichtung, beispielsweise ein RFID- Reader angeordnet ist und die Dosiereinheit ein Identifizierungsmerkmal, beispielsweise einen RFID- Tag aufweist, kann die Erfassung der Daten jeder Dosiereinheit oder Funktionseinheit auch automatisch beim Bestücken der Halterung mit Dosiereinheiten erfolgen. Solche Daten können die technischen Daten der Dosiereinheit, wie beispielsweise das Inbetriebnahmedatum, die Anzahl Dosierungen, das Datum der letzten Dosierung und dergleichen mehr sein. Weitere Daten können die in der Dosiereinheit verfüllte Substanz betreffen, beispielsweise deren Art und Zusammensetzung, deren Verfalldatum, deren ermittelte, die Fliessfähigkeit der Substanz betreffenden Parameter und dergleichen mehr. Auch die Funktionseinheiten können einen RFID-Speicherchip aufweisen, auf welchem technische Daten zur Funktion gespeichert sind. Gegebenenfalls sind sogar Benutzungshinweise oder sogar Programmmodule aus diesem Speicherchip abrufbar, welche einzelne Prozessschritte der Dosiervorrichtung beeinflussen und/oder steuern. Insbesondere bei der Datenerfassung und bei der Bestückung ist die unabhängig bewegbare Halterung von grossem Vorteil. So kann auch während eines Dosiervorganges die Halterung aus nur einer Richtung bestückt werden und es ist nur eine Schreib-Lesevorrichtung notwendig, um die Daten aller RFID- Speicherchips zu erfassen. Ferner kann, sobald die Aufnahmevorrichtung die obere Ebene verlassen hat, jede in der Halterung befindliche Dosiereinheit oder Funktionseinheit jederzeit an der Schreib-Lesevorrichtung vorbeigeführt und deren Daten gelesen oder verändert werden.

Vorzugsweise weist der mindestens eine Halteplatz mindestens zwei Halterungsnuten und die Aufnahmevorrichtung mindestens zwei Träger auf. Ferner sind an der Dosiereinheit oder Funktionseinheit zu den Trägern passende Auflagestellen und zu den Halterungsnuten passende Führungsschienen ausgebildet. Die Halterungsnuten, Auflagestellen, Träger und Führungsschienen erstrecken sich in ihrer Längsrichtung vorzugsweise parallel zueinander sowie parallel zur horizontalen Bewegung der Wechselvorrichtung.

Um eine ausserordentlich kompakte Bauweise der Dosiereinheit, der Funktionseinheit, des Halteplatzes und der Aufnahmevorrichtung zu ermöglichen, greifen die Träger der Aufnahmevorrichtung vorzugsweise in den Halteplatz hinein. Dies ist dann möglich, wenn die Dosiereinheit oder Funktionseinheit zwischen einem vertikal angeordneten inneren und äusseren Ebenenpaar angeordnet ist, wobei jede Ebene des inneren Ebenenpaars je mindestens eine Auflagestelle und jede Ebene des äusseren Ebenenpaars je mindestens eine Führungsschiene aufweist.

Die Bestückung des mindestens einen Halteplatzes mit einer Dosiereinheit oder Funktionseinheit kann manuell erfolgen. Sofern aber die erfindungsgemässe Dosiervorrichtung beispielsweise in einer grösseren Anlage integriert ist, kann es sinnvoll sein, die Bestückung des Halteplatzes beziehungsweise der Halterung, mittels einer Beschickungsvorrichtung durchzuführen. Zu diesem Zwecke ist an der Dosiereinheit oder Funktionseinheit mindestens eine Greiferkuppelstelle ausgebildet. Die Beschickungsvorrichtung, beispielsweise ein Industrieroboter, weist einen Greifer auf, welcher in die Greiferkuppelstelle eingreifen kann, so dass die Dosiereinheit oder Funktionseinheit kraftschlüssig und/oder formschlüssig mit der Beschickungsvorrichtung verbindbar ist. Um die Übertragung von Erschütterungen zu vermeiden, ist die Beschickungsvorrichtung vorzugsweise unabhängig zur Dosiervorrichtung angeordnet. Sinnvollerweise erfolgt die Bestückung des Halteplatzes mit einer Dosiereinheit oder Funktionseinheit mittels einer zum Grundrahmen hin gerichteten, horizontalen Bewegung, da keinerlei Bauteile der Dosiervorrichtung diese Richtung behindern. Selbstverständlich müssen der Halteplatz beziehungsweise die Halterungsnuten dahingehend ausgebildet sein, dass eine Beschickung aus dieser Richtung, sozusagen "von Vorne" möglich ist. Idealerweise wird die Dosiereinheit oder Funktionseinheit auch von der Wechselvorrichtung aus dieser Richtung in den mindestens einen Halteplatz eingeführt, um die Dosiereinheit oder Funktionseinheit von der Aufnahmevorrichtung zu entfernen. Die Aufnahme der Dosiervorrichtung in die Aufnahmevorrichtung erfolgt dementsprechend in einer vom Grundrahmen weg gerichteten, horizontalen Bewegung. Insbesondere bei der Bestückung ist die unabhängig von der Aufnahmevorrichtung bewegbare Halterung von grossem Vorteil. So kann während des Dosierens die Halterung aus nur einer Richtung bestückt werden.

Damit die Dosiereinheit oder Funktionseinheit während den Bewegungsvorgängen nicht aus der Aufnahmevorrichtung oder infolge von Erschütterungen nicht aus dem Halteplatz fällt, kann zwischen mindestens einer Halterungsnut und einer Führungsschiene und/oder zwischen mindestens einem Träger und einer Auflagestelle ein durch Krafteinwirkung lösbares Einrastelement angeordnet sein. Solche Einrastelemente können federbeaufschlagte Kugelrastelemente, Federzungen und dergleichen mehr, oder sogar Magnetpaare sein.

An Stelle der Einrastelemente kann die mindestens eine Halterungsnut und/oder Auflagestelle eine, orthogonal zu ihrer Längsachse und sich im Wesentlichen in vertikaler Richtung erstreckende Ausnehmung aufweisen und an der mindestens einen Führungsschiene und/oder am Träger ein, orthogonal zu seiner Längsachse und sich im Wesentlichen in vertikaler Richtung erstreckender Vorsprung ausgebildet sein. Zum Trennen der Dosiervorrichtung von der Aufnahmevorrichtung und/oder vom mindestens einen Halteplatz ist dann eine vertikale Entriegelungsbewegung notwendig. Entsprechend ist zum Einsetzen der Dosiereinheit oder Funktionseinheit in die Aufnahmevorrichtung und/oder in den mindestens einen Halteplatz eine vertikale Absetzbewegung erforderlich.

Je nach Einsatzgebiet, beispielsweise in Entwicklungslabors für pharmazeutische Substanzen, müssen Kleinstmengen dieser Substanzen hochpräzise ausdosiert werden können. Dosiervorrichtungen, welche diese Anforderungen erfüllen, weisen eine hochpräzise Wägezelle auf. Mit deren Wägesignal wird der Dosiervorgang überwacht und gesteuert. Der Dosier- und Messvorgang findet innerhalb eines Windschutzes statt, so dass Luftturbulenzen der Umgebung das Wägeresultat nicht beeinflussen. Um komplizierte Windschutzkonstruktionen mit mechanisch anspruchsvollen Schleusen zu vermeiden, müssten die in der EP 1 959 244 A1 offenbarten Wechselvorrichtungen innerhalb des Windschutzes angeordnet sein. Je grösser der Windschutz ist, desto langsamer klingen jedoch Luftturbulenzen, verursacht beispielsweise durch einen Wechsel einer Dosereinheit innerhalb des Windschutzes, ab. Ferner nimmt mit der Zunahme des Innenraums des Windschutzes die Wahrscheinlichkeit zu, dass durch Temperaturdifferenzen innerhalb des Wägeraums verursachte Luftbewegungen vorhanden sein können. Dies führt dazu, dass die minimal erreichbare Toleranzbandbreite der Massen- Zielvorgabe auch in erheblichem Masse vom Innenvolumen des Windschutzes abhängt.

Die vorliegende erfindungsgemässe Dosiervorrichtung mit einer Wechselvorrichtung ermöglicht nun den Einsatz eines den Lastaufnehmer umgebenden und mit dem Grundrahmen verbundenen Windschutzes. Dieser kann auf die zum Einsatz gelangenden Zielgefässe abgestimmt sein. Dementsprechend kann sein Innenvolumen sehr klein gehalten werden. Da der Transfer der Dosiereinheit oder Funktionseinheit von der Halterung zum Zielgefäss im Wesentlichen in vertikaler Richtung erfolgt, ist vorzugsweise der Windschutz in Richtung der oberen horizontalen Ebene und demzufolge gegen oben zumindest partiell offen.

Um während eines Dosiervorgangs den Windschutz auch gegen oben abzuschliessen, kann an der Aufnahmevorrichtung eine geeignete Windschutzabdeckung in einer ersten Ausführung angeordnet sein. Diese Windschutzabdeckung ist mit mindestens einem Durchbruch für einen an der Dosiereinheit oder Funktionseinheit ausgebildeten Auslass versehen. Anstelle des Auslasses kann bei einer Funktionseinheit, wie weiter oben beschrieben, selbstverständlich auch deren Werkzeug, beispielsweise ein Temperaturfühler oder ein Rührwerk durch den Durchbruch hindurchreichen.

In einer zweiten Ausführung kann die Windschutzabdeckung auch an der Dosiereinheit oder Funktionseinheit angeordnet sein. Auch mittels dieser ist der nach oben offene Windschutz verschliessbar. Selbstverständlich kann auch der gesamte Windschutz am Dosierkopf ausgebildet sein und beim Dosiervorgang das Zielgefäss und den Lastaufnehmer vollständig abdecken.

Sofern der mit der Auslassöffnung versehene Bereich der Dosiereinheit teilweise in das Zielgefäss hineinragen soll, muss eine genügend grosse Öffnung in der Windschutzabdeckung vorhanden sein. Vorzugsweise ist die Kontur der Öffnung des partiell nach oben offenen Windschutzes auf denjenigen Querschnitt der Dosiereinheit angepasst, welcher während eines Dosiervorgangs in dieser Öffnung angeordnet ist.

Dadurch wird ein Luftaustausch zwischen dem Windschutz-Innenraum und der Umgebung weitgehend verhindert.

Beim Dosieren klebriger Substanzen kann es möglich sein, dass im Bereich der Auslassöffnung der Dosiereinheit einzelne Partikel an deren Gehäuse- Aussenseite hängen bleiben. Insbesondere sind aber auch die Funktionseinheiten nach deren Gebrauch kontaminiert. Vorzugsweise ist deshalb am Grundrahmen eine Reinigungsvorrichtung zur Reinigung der Dosiereinheiten und Funktionseinheiten angeordnet. Je nach Ausführung der Dosiervorrichtung kann diese bei der Halterung oder auch in einer Zwischenposition angeordnet sein. Die Anordnung im Bereich der Halterung hat den Vorteil, dass mittels einer Verschiebung oder Rotation der Halterung relativ zum Grundrahmen der Halteplatz in den Bereich der Reinigungsvorrichtung gelangen kann. Um mit der Aufnahmevorrichtung eine in einer Zwischenposition angeordnete Reinigungsvorrichtung anzufahren, sind gegebenenfalls wie oben bereits erwähnt, weitere untergeordnete Bewegungen in horizontaler und vertikaler Richtung erforderlich. Eine Reinigungsvorrichtung kann eine Abstreifvorrichtung und/oder eine Absaugvorrichtung und/oder eine Waschstation sein.

Selbstverständlich kann die Halterung nicht nur eine, sondern mehrere in einer horizontalen Ebene und linear nebeneinander angeordnete Halteplätze für Dosiereinheiten und Funktionseinheiten aufweisen. Jeder Halteplatz ist relativ zum Grundrahmen und zu einer definierten, zum Grundrahmen ortsfesten Übergabestelle linear horizontal verschiebbar angeordnet. Die Wechselvorrichtung ist derart ausgelegt, dass die Aufnahmevorrichtung die jeweilige Dosiereinheit oder Funktionseinheit an dieser Übergabestelle von ihrem Halteplatz aufnimmt beziehungsweise an diesen abgibt.

Wenn sehr viele Dosiereinheiten und Funktionseinheiten in der Halterung untergebracht werden sollen, kann es sinnvoll sein, dass die Halterung mehrere in einer horizontalen Ebene und ringförmig nebeneinander angeordnete Halteplätze für Dosiereinheiten aufweist. Diese Halterung ist um eine vertikale Drehachse relativ zum Grundrahmen drehbar. Dadurch kann jeder Halteplatz zu einer definierten, zum Grundrahmen fixen Übergabestelle bewegt werden.

Es versteht sich von selbst, dass zwischen der oberen Ebene des Grundrahmens, in welcher die Halterung angeordnet ist und der unteren Ebene des Grundrahmens, in welcher die Wägezelle mit dem Lastaufnehmer angeordnet ist, mindestens eine Zwischenhalterung in mindestens einer horizontalen Zwischenebene angeordnet sein kann. Damit Dosiereinheiten oder Funktionseinheiten aus der oberen Ebene in die untere Ebene befördert werden können, sollte an der mindestens einen Zwischenhalterung eine Durchgangsposition für die Aufnahmevorrichtung ausgebildet sein. Diese Durchgangsposition kann deshalb keinen Halteplatz aufweisen.

In der mindestens einen Dosiereinheit kann eine pulverförmige, pastenförmige oder flüssige Substanz verfüllt sein. Ferner kann die Dosiereinheit aber auch eine Versorgungsleitung aufweisen, welche mit einem Vorratsgefäss und gegebenenfalls mit einer Pumpe verbunden ist.

Ferner kann eine Vielzahl von unterschiedlichen Funktionseinheiten eingesetzt werden. Beispielsweise kann eine Funktionseinheit eine Titratoreinheit, eine Pumpeinheit, eine Pipettiereinheit, eine Einheit mit Rohrleitungen und Armaturen, eine Behältereinheit eine Sensoreinheit oder ein Adapter zur Aufnahme einer dieser Einheiten oder weiterer Einheiten sein. Als weitere Einheiten können beispielsweise auch Rührwerke, Mahlwerke oder Heiz- und/oder Kühleinheiten als Funktionseinheiten eingesetzt werden. Dadurch, dass aus einer ganzen Palette verschiedener einsetzbarer Funktionseinheiten ausgewählt werden kann, ist die Dosiervorrichtung nicht nur zum dosieren von pulver- oder pastenförmigem Dosiergut sowie von Flüssigkeiten verwendbar, sondern kann zur Weiterbehandlung des Dosiergutes in eine Art Minilabor mit über die Kraftmessvorrichtung kontinuierlich erfassbaren Gewichtswerten verwandelt werden.

Einzelheiten der erfindungsgemässen Dosiervorrichtung ergeben sich anhand der Beschreibung der in den Zeichnungen dargestellten Ausführungsbeispiele. Es zeigen:

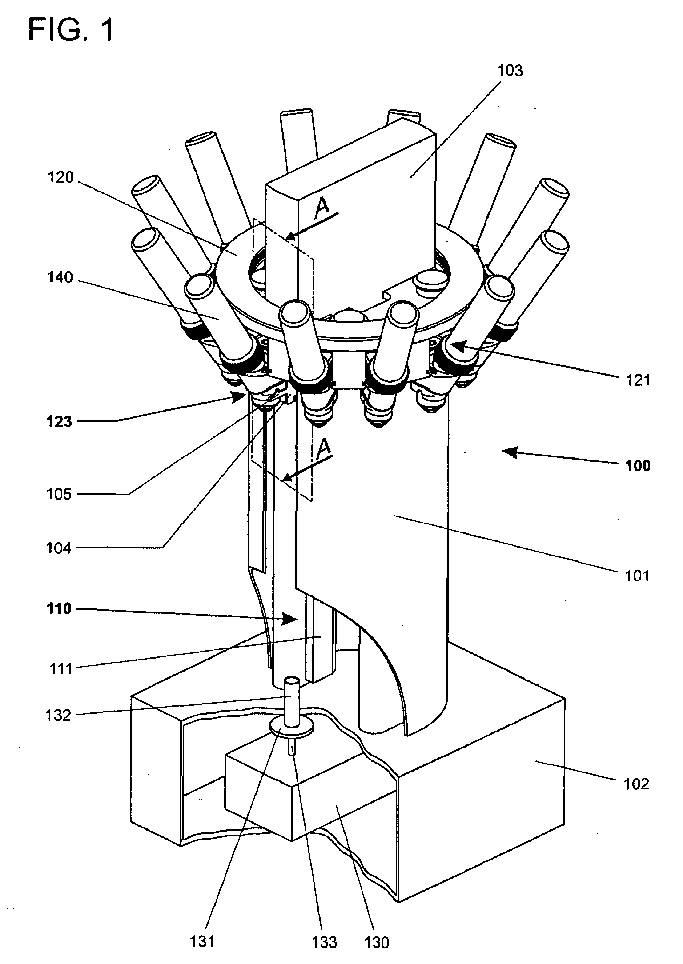

- Figur 1: eine schematische, dreidimensionale Darstellung einer Dosiervorrichtung mit einer Wechselvorrichtung, mit einem Grundrahmen, mit einer am Grundrahmen drehbar gelagerten, ringförmigen Halterung, mit einer Antriebsvorrichtung und einer Aufnahmevorrichtung, welche durch die Wechselvorrichtung mit dem Grundrahmen verbunden sind und einer am Grundrahmen angeordneten Wägezelle mit einem Lastaufnehmer sowie zwölf in die Halterung einsetzte Dosiereinheiten;

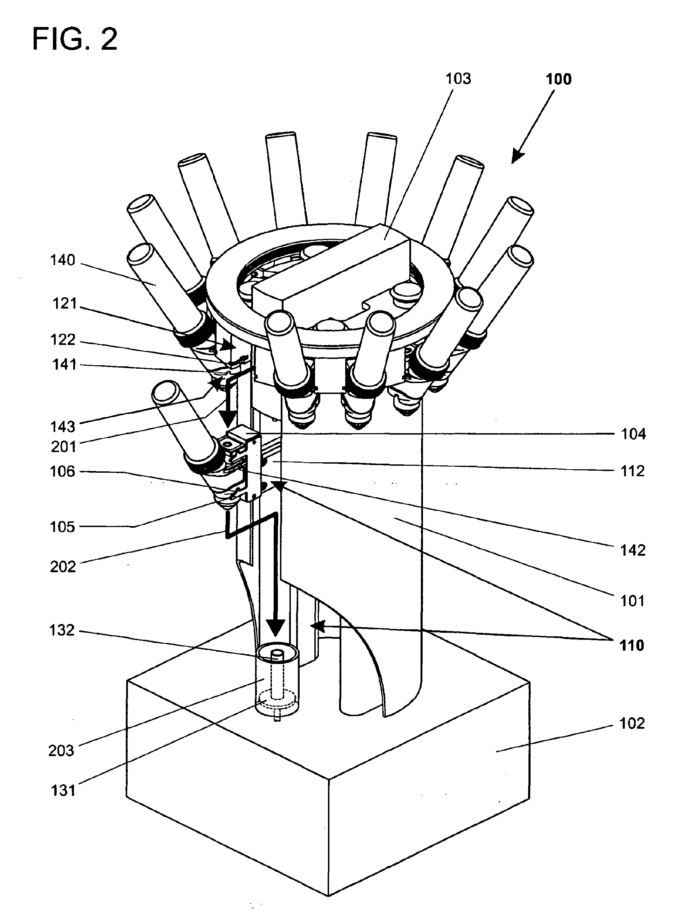

- Figur 2: die schematische, dreidimensionale Darstellung der Dosiervorrichtung aus der Figur 1, wobei der Lastaufnehmer und ein auf den Lastaufnehmer aufgelegtes Zielgefäss mit einem Windschutz umschlossen ist und sich die Aufnahmevorrichtung und die darin eingesetzte Dosiereinheit in einer Zwischenposition zwischen der Halterung und der Wägezelle befindet;

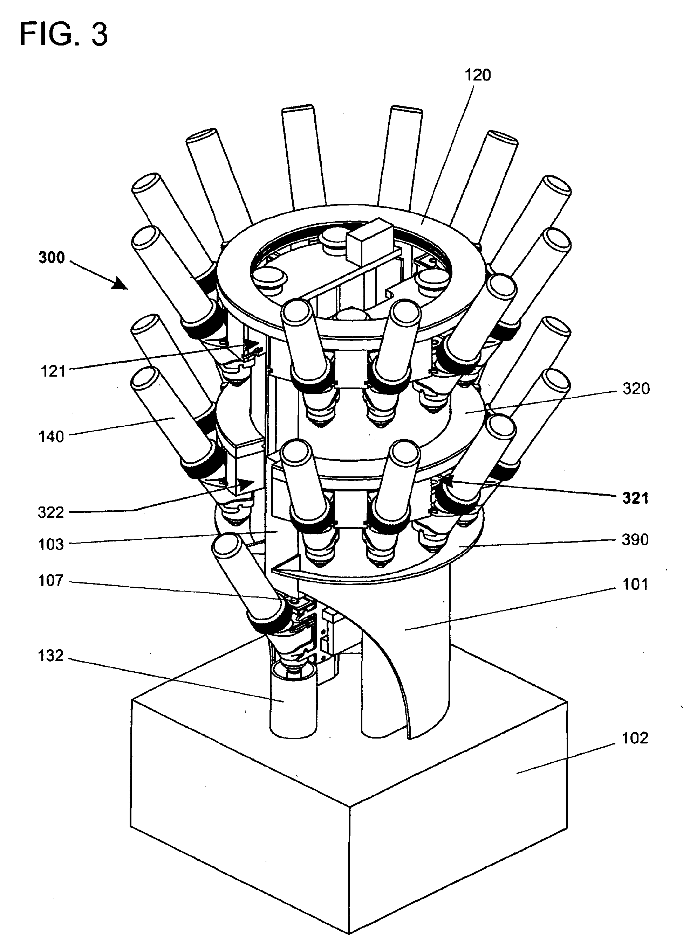

- Figur 3: im Wesentlichen die schematische, dreidimensionale Darstellung der Dosiervorrichtung aus den Figuren 1 und 2, wobei am Grundrahmen zwischen der Halterung und dem Zielgefäss zusätzlich eine Zwischenhalterung angeordnet ist und sich die Aufnahmevorrichtung und die darin eingesetzte Dosiereinheit unmittelbar über dem Zielgefäss befindet;

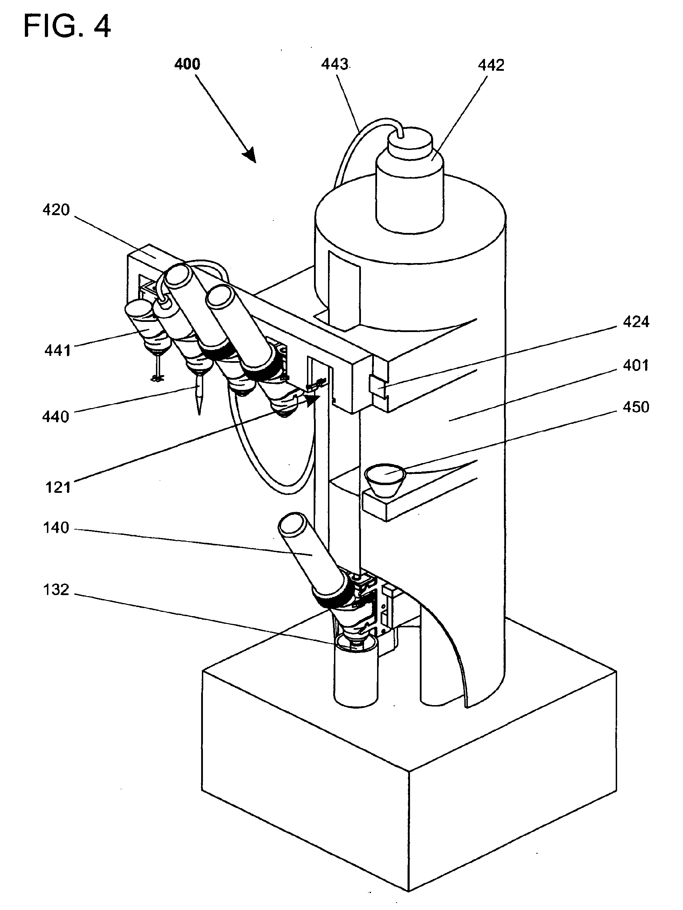

- Figur 4: eine schematische, dreidimensionale Darstellung einer Dosiervorrichtung mit einer Wechselvorrichtung, mit einem Grundrahmen, mit einer am Grundrahmen linear verschiebbar geführten Halterung, mit einer Antriebsvorrichtung und einer Aufnahmevorrichtung, welche durch die Wechselvorrichtung mit dem Grundrahmen verbunden sind und einer am Grundrahmen angeordneten Wägezelle mit einem Lastaufnehmer sowie mit drei Dosiereinheiten und zwei Funktionseinheiten, welche in die Halterung einsetzt sind;

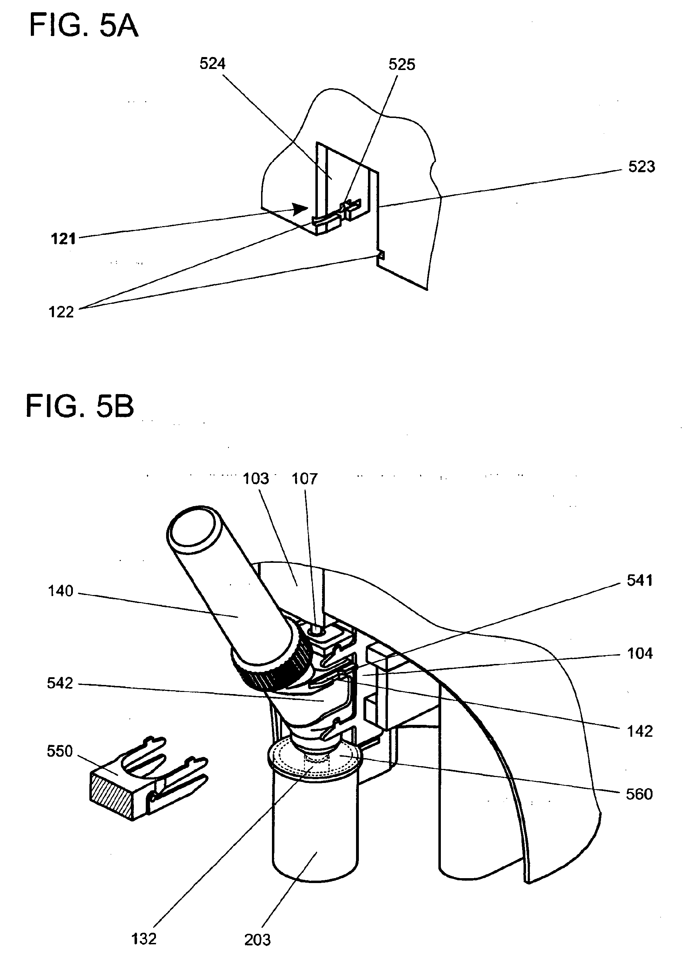

- Figur 5A: eine dreidimensionale Detailansicht eines Halteplatzes der Halterung aus den vorangehenden Figuren 1 bis 3;
- Figur 5B: eine dreidimensionale Detailansicht des sich über dem Zielgefäss befindlichen Dosierkopfs aus den Figuren 3 und 4, wobei an der Aufnahmevorrichtung zusätzlich eine Windschutzabdeckung angeordnet ist und ferner ein Teil eines Greifers einer Beschickungsvorrichtung angedeutet ist;

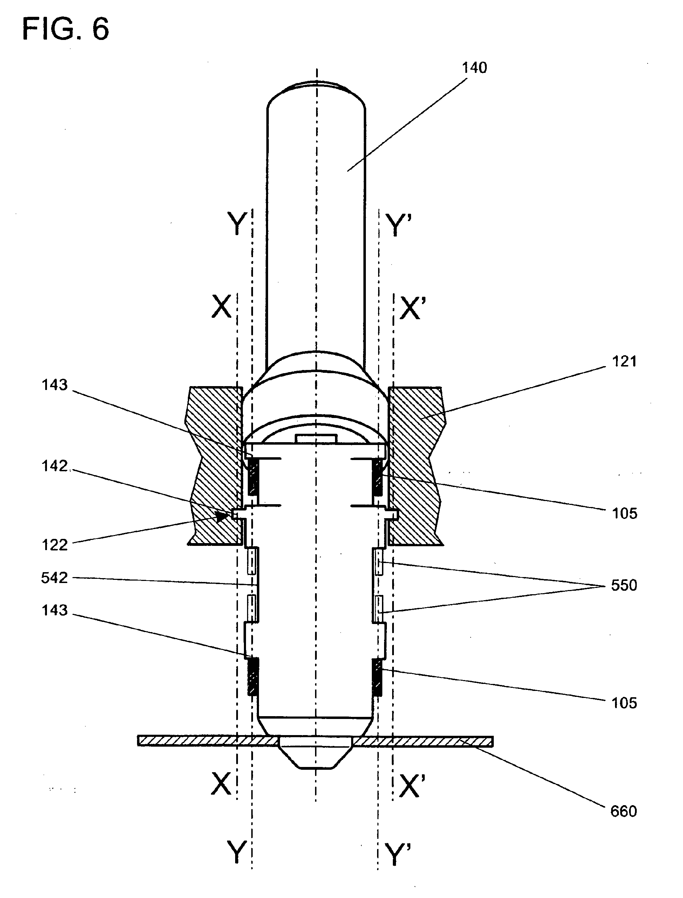

- Figur 6: eine Dosiereinheit eingesetzt in den Halteplatz einer Halterung, in der Aufsicht gemäss der in Figur 1 angegebenen Ebene A-A.

Die Figur 1 zeigt eine schematische, dreidimensionale Darstellung einer Dosiervorrichtung 100 mit einer Wechselvorrichtung 110. Die Dosiervorrichtung 100 weist einen Grundrahmen 101 auf. In einer oberen, horizontalen Ebene des Grundrahmens 101 ist eine um ihre senkrechte Drehachse drehbar gelagerte, ringförmige Halterung 120 angeordnet und mit dem Grundrahmen 101 verbunden. Die Halterung 120 weist insgesamt zwölf Halteplätze 121 auf, welche mit je einer Dosiereinheit 140 bestückt sind. Selbstverständlich müssen nicht alle Halteplätze 121 bestückt sein um ein einwandfreies Arbeiten der Dosiervorrichtung 100 zu gewährleisten. Vorzugsweise ist die Position jedes Halteplatzes 121 in einer nicht dargestellten elektronischen Speichereinheit eingespeichert, so dass ein in einem Prozessormodul der Dosiervorrichtung 100 ausführbares Betriebsprogramm den gewünschten Halteplatz 121 findet und zu einer Übergabestelle 123 drehen kann. In dieser Speichereinheit können selbstverständlich auch Daten der im Halteplatz 121 eingesetzten Dosiereinheit 140 eingespeichert sein. Sofern im Bereich der Halterung 120 eine elektronische Lesevorrichtung, beispielsweise ein RFID- Reader angeordnet ist und die Dosiereinheit 140 ein Identifizierungsmerkmal, beispielsweise einen RFID-Tag aufweist, kann die Erfassung der Daten jeder Dosiereinheit 140 auch automatisch beim Bestücken der Halterung 120 mit Dosiereinheiten 140 erfolgen. Solche Daten können die technischen Daten der Dosiereinheit 140, wie beispielsweise das Inbetriebnahmedatum, die Anzahl Dosierungen, das Datum der letzten Dosierung und dergleichen mehr sein. Weitere Daten können die in der Dosiereinheit 140 verfüllte Substanz betreffen, beispielsweise deren Art und Zusammensetzung, deren Verfalldatum, deren ermittelte, die Fliessfähigkeit der Substanz betreffenden Parameter und dergleichen mehr. Selbstverständlich können die Halteplätze 121 an Stelle der Dosiereinheiten 140 auch mit einer der in der EP 1 959 243 A1 offenbarten Funktionseinheiten bestückt sein. Auch diese können einen RFID- Speicherchip aufweisen, auf welchem technische Daten zur Funktion der Funktionseinheiten gespeichert sind. Gegebenenfalls sind sogar Benutzungshinweise oder sogar Programmmodule aus diesem Speicherchip abrufbar, welche einzelne Prozessschritte der Dosiervorrichtung 100 beeinflussen und/oder steuern. Insbesondere bei der Datenerfassung ist die unabhängig bewegbare Halterung 120 von grossem Vorteil. So kann während des Dosierens die Halterung 120 aus nur einer Richtung bestückt werden und es ist nur eine Schreib-Lesevorrichtung notwendig, um die Daten aller RFID- Speicherchips zu erfassen.

In einer unteren Ebene des Grundrahmens 101 ist ein Gehäuse 102 ausgebildet, welches im Teilschnitt dargestellt ist, um eine im Innern des Gehäuses 102 angeordnete Wägezelle 130 zu zeigen. Ein Lastaufnehmer 131, welcher in der Betriebsstellung der Dosiervorrichtung 100 oberhalb des Gehäuses 102 angeordnet ist, ist mittels eines durch das Gehäuse 102 geführten Kraftübertragungsgliedes 133 mit der Wägezelle 130 verbunden. Auf dem Lastaufnehmer 131 ist ein Zielgefäss 132 aufgelegt.

Innerhalb des rohrförmigen Grundrahmens 101 ist teilweise eine vertikale Linearführung 111 der Wechselvorrichtung 110 erkennbar. Mittels dieser vertikalen Linearführung 111 wird eine Antriebsvorrichtung 103 und eine knapp erkennbare Aufnahmevorrichtung 104 vertikal verschiebbar geführt. Die Antriebsvorrichtung 103 ist mit einem in der Dosiereinheit 140 angeordneten, in Figur 1 nicht dargestellten Dosierorgan koppelbar. Das Dosierorgan gibt eine Auslassöffnung der Dosiereinheit 140 frei, sobald es mit der Antriebsvorrichtung 103 gekoppelt ist und durch diese betätigt wird. Durch die Auslassöffnung kann das in der Dosiereinheit 140 gebunkerte Dosiergut hernach in ein unterhalb der Auslassöffnung angeordnetes Zielgefäss 132 fliessen.

Der in der Übergabestelle 123 befindliche Halteplatz 121 ist mit einer Dosiereinheit 140 bestückt. Ferner ist in der Figur 1 erkennbar, dass die Wechselvorrichtung 110 zur Übergabe einer Dosiereinheit 140 an die Aufnahmevorrichtung 104 bereit ist, da die Aufnahmevorrichtung 104 mit ihrem Träger 105 an der Dosiereinheit angreift. Der genaue Aufbau der Aufnahmevorrichtung 104 und der Wechselvorrichtung 110 wird nachfolgend anhand der Figur 2 ausführlicher beschrieben. Die Anordnung der Führungsschienen, Auflagestellen, Träger und Halterungsnuten, welche eine reibungslose Übergabe ermöglichen, werden weiter unten anhand der Figur 6 beschrieben, deren Betrachtungsebene A-A in der Figur 1 eingezeichnet ist.

In der Figur 2 ist wiederum die aus der Figur 1 bekannte Dosiervorrichtung 100 dargestellt. Alle Elemente, welche bereits in der Figur 1 beschrieben worden sind, weisen dieselben Bezugszeichen auf. In Figur 2 ist die Wechselvorrichtung 110 mit ihren beiden Linearführungen 111, 112 besser erkennbar. Die horizontale Linearführung 112 der Wechselvorrichtung 110 ist zwischen der Antriebsvorrichtung 103 und der Aufnahmevorrichtung 104 angeordnet. Somit ist die Aufnahmevorrichtung 104 relativ zur Antriebsvorrichtung 103 und zum Grundrahmen 101 horizontal verschiebbar. Die Antriebsvorrichtung 103, die horizontale Linearführung 112 und die Aufnahmevorrichtung 104 sind durch die vertikale Linearführung 111 geführt, miteinander in vertikaler Richtung relativ zum Grundrahmen 101 bewegbar. Ferner ist jeder Linearführung 111, 112 eine nicht dargestellte Antriebseinheit zugeordnet, welche mittels einer ebenfalls nicht dargestellten Steuerung angesteuert werden kann. Die Steuerung kann Teil der Wechselvorrichtung 110 sein. Möglicherweise ist es aber vorteilhafter, wenn die Steuerung der Antriebseinheiten direkt durch die Steuerung der Dosiervorrichtung 100 oder durch ein von der Dosiervorrichtung 100 unabhängiges Steuerungssystem übernommen wird.

Die Aufnahmevorrichtung 104 ist gabelförmig ausgebildet und weist vier sich in horizontaler Richtung erstreckende Träger 105 mit je einem sich in vertikaler Richtung erstreckenden Vorsprung 106 auf. Bei in die Aufnahmevorrichtung 104 eingesetzter Dosiereinheit 140 greifen die Träger 105 in an der Dosiereinheit 140 ausgebildete Auflagestellen 143 ein. Wegen der eingesetzten Dosiereinheit 140 sind nur zwei Träger 105 sichtbar. Die Vorsprünge 106 greifen in an der Dosiereinheit 140 ausgebildete Ausnehmungen 141 ein und verhindern dadurch, dass die Dosiereinheit 140 während des Transports mittels der Wechselvorrichtung 110 aus der Aufnahmevorrichtung 104 fällt. Zwecks der Aufnahme einer Dosiereinheit 140 in die Aufnahmevorrichtung 104 beziehungsweise deren Entfernung aus der Aufnahmevorrichtung 104 muss deshalb eine vertikale, kurzhubige Bewegung der Aufnahmevorrichtung 104 relativ zur Dosiereinheit 140 erfolgen.

Die in der Figur 1 beschriebene Übergabe der Dosiereinheit ist in Figur 2 bereits abgeschlossen und die Dosiereinheit 140 ist auf dem Wege zum Zielgefäss 132, wobei der erste Pfeil 201 den bereits zurückgelegten Weg markiert und der zweite Pfeil 202 den noch zurückzulegenden Weg darstellt. Der erste Pfeil 201 weist einen horizontalen Abschnitt und einen vertikalen Abschnitt auf. Der horizontale Abschnitt zeigt an, dass die Dosiereinheit 140 mittels einer vom Grundrahmen 101 weg gerichteten horizontalen Bewegung aus dem Halteplatz 121 herausgeschoben wurde. Dies ist nur dann möglich, wenn die an der Dosiereinheit 140 ausgebildeten Führungsschienen 142 und die dazu passenden Halterungsnuten 122 des Halteplatzes 121 sich parallel zum horizontalen Abschnitt des ersten Pfeils 201 erstrecken. Sobald die Dosiereinheit vollständig aus dem Halteplatz herausgelöst ist, kann die vertikale Bewegung eingeleitet werden. Auch der zweite Pfeil 202 weist einen horizontalen Abschnitt auf. Mit dieser horizontalen Bewegung wird die Dosiervorrichtung 140 zur Antriebsvorrichtung 103 hin bewegt, bis die Dosiereinheit 140, beziehungsweise deren Dosierorgan, mit der Antriebsvorrichtung 103 koppelbar ist. Zudem wird mit dieser Bewegung die Dosiereinheit 140, beziehungsweise deren Auslassöffnung, zur Einfüllöffnung des Zielgefässes 132 ausgerichtet. Damit das Zielgefäss 132 beziehungsweise der Lastaufnehmer 131 vor Luftturbulenzen, welche das Wägesignal beeinflussen können, geschützt sind, ist am Gehäuse 102 ein nach oben offener Windschutz 203 festgelegt.

Auch die Figur 3 zeigt im Wesentlichen die in den Figuren 1 und 2 schematisch dargestellte Dosiervorrichtung 300. Identische Elemente, welche bereits in den Figuren 1 und 2 beschrieben worden sind, weisen auch hier dieselben Bezugszeichen auf. Der wesentliche Unterschied zu den vorangehen beschriebenen Figuren besteht darin, dass zwischen der Halterung 120 und dem Gehäuse 102 eine Zwischenhalterung 320 in einer horizontalen Zwischenebene angeordnet ist. Wie die Halterung 120, ist auch die Zwischenhalterung 320 um eine vertikale Drehachse drehbar gelagert mit dem Grundrahmen 101 verbunden. Die Zwischenhalterung 320 mit ihren Halteplätzen 321 ist nahezu identisch wie die Halterung 120 ausgestaltet. Der wesentliche Unterschied zur Halterung 120 besteht darin, dass eine Durchgangsposition 322 anstelle eines Halteplatzes 321 ausgebildet ist. Dies ist notwendig, damit Dosiereinheiten 140 oder Funktionseinheiten aus der Halterung 120 zum Zielgefäss 132 befördert werden können.

Figur 3 zeigt ferner die Dosiervorrichtung 300 während eines Dosiervorgangs. Die Antriebsvorrichtung 103, die Aufnahmevorrichtung 104 und die in der Aufnahmevorrichtung 104 aufgenommene Dosiereinheit 140 befinden sich in der unteren Ebene des Grundrahmens 101, knapp über der Einfüllöffnung des Zielgefässes 132. Das Dosierorgan der Dosiereinheit 140 ist mit einer Antriebswelle 107 der Antriebsvorrichtung 103 gekoppelt. Sobald die Antriebswelle 107 das Dosierorgan antreibt, wird die Austrittsöffnung der Dosiereinheit 140 freigegeben und Dosiergut aus der Dosiereinheit 140 in das Zielgefäss 132 ausgetragen. Sobald der Dosiervorgang abgeschlossen ist, erfolgt die Rückführung der Dosiereinheit 140 in den ihr zugeordneten Halteplatz 121, 321 auf demselben Wege, wie er in Figur 2 mittels der Pfeile 201 und 202 angegeben worden ist, aber logischerweise in umgekehrter Richtung.

In Figur 3 ist ferner schematisch eine Auffangschale 390 dargestellt, welche unterhalb der Zwischenhalterung 320 am Grundrahmen 101 angeordnet ist. Die Auffangschale 390 ist ringförmig ausgebildet und dient dem Auffangen von Schmutz, beispielsweise von Substanzpartikeln, welche im Bereich der Auslassöffnung der Dosiereinheiten 140 vorhanden sein könnten. Selbstverständlich kann die Auffangschale 390 noch geeigneter ausgebildet sein, beispielsweise dadurch, dass sie ein verschiebbares Segment aufweist um die Durchgangsposition 322 ebenfalls abzudecken. Ferner kann die Auffangschale 390 mit einem geschlossenen Gehäuse versehen sein, so dass die in den Halteplätzen 121, 321 eingesetzten Dosiereinheiten 140 vollständig innerhalb dieses Gehäuses angeordnet sind. Selbstverständlich könnte der Innenraum eines solchen Gehäuses kontinuierlich mit einem Schutzgas begast werden, um die in den Dosiereinheiten 140 gelagerten Substanzen von Umgebungseinflüssen zu schützen.

Figur 4 zeigt eine schematische, dreidimensionale Darstellung einer Dosiervorrichtung 400. Alle Elemente, welche bereits in den Figuren 1 bis 3 beschrieben worden sind, weisen dieselben Bezugszeichen auf. Der Grundrahmen 401 unterscheidet sich im Vergleich zum Grundrahmen der vorangehend beschriebenen Beispiele geringfügig. Dies deshalb, weil die Dosiervorrichtung 400 eine zum Grundrahmen 401 mittels einer Längsführung 424 horizontal linear verschiebbar geführte Halterung 420 aufweist. Die an der Halterung 420 ausgebildeten Halteplätze 121 entsprechen in ihrer Ausgestaltung den vorangehend beschriebenen Halteplätzen. Die Dosiervorrichtung 400 ist mit drei Dosiereinheiten 140 und mit zwei Funktionseinheiten 440, 441 bestückt. Die erste Funktionseinheit 440 ist eine Pumpeinheit, mittels welcher eine Flüssigkeit aus einem separaten Vorratsgefäss 442 über eine Versorgungsleitung 443 in das Zielgefäss 132 gepumpt werden kann. Sofern der Innenraum des Vorratsgefäss 442 unter einem Gasüberdruck steht, kann die Funktionseinheit 440 auch nur ein Mikroventil aufweisen, da die Flüssigkeit durch den Gasüberdruck aus dem Vorratsgefäss zum Mikroventil hin befördert wird. Die zweite Funktionseinheit 441 ist ein Rührwerk, mittels welchem beispielsweise ein aus den Dosiereinheiten 140 ausdosiertes Pulver mit der durch die Pumpeinheit zudosierten Flüssigkeit gerührt werden kann.

Nach dem Rührvorgang ist das Rührwerk mit der im Zielgefäss 132 vorhandenen Lösung benetzt und daher kontaminiert. Zum Reinigen der Funktionseinheiten 440, 441 und Dosiereinheiten 140 kann die Dosiervorrichtung 400 eine sehr schematisch dargestellte Reinigungsvorrichtung 450 aufweisen, die am Grundrahmen 401 angeordnet sein kann. Zum Reinigen kann beispielsweise die benutzte Funktionseinheit 440, 441 zuerst wieder an ihren Halteplatz 121 befördert und der Halteplatz 121 anschliessend zur Reinigungsvorrichtung 450 verschoben werden. Es sind aber auch Anordnungen möglich, bei welcher die Reinigungsvorrichtung 450 während des Rückweges einer Dosiereinheit 140 oder Funktionseinheit 440, 441 zu ihrem Halteplatz 121 durchfahren wird. Die Reinigungsvorrichtung 450 kann selbstverständlich verschiedene Zusatzmodule aufweisen, so zum Beispiel eine Absaugvorrichtung für mit Pulver kontaminierte Dosiereinheiten 140 und/oder eine Waschstation für kontaminierte Funktionseinheiten 440, 441. Ferner können weitere Elemente wie Bürsten, Warmluftgebläse zum Trocknen und dergleichen mehr eingesetzt werden.

Um Details besser darstellen und beschreiben zu können, zeigt die Figur 5A eine dreidimensionale Detailansicht eines Halteplatzes 121, wovon die Halterungen aus den vorangehenden Figuren 1 bis 4 vorzugsweise mehrere aufweisen. Jeder Halteplatz 121 ist im Wesentlichen durch eine U-förmige, gegen unten offene Ausnehmung an der Halterung ausgebildet. Durch die Ausnehmung werden zwei Seitenwände 523, 524 gebildet. Die Seitenwände 523, 524 weisen je eine Halterungsnut 122 auf. Mindestens eine der Halterungsnuten 122 weist ein Einrastelement 525 auf. Das in der Figur 5A nur teilweise sichtbare Einrastelement 525 ist eine Kugelraste in bekannter Ausgestaltung. Diese weist im Wesentlichen eine Kugel und eine hier nicht sichtbare, weil hinter der Kugel angeordnete Druckfeder auf, welche in einer Sackbohrung angeordnet sind.

Figur 5B zeigt eine dreidimensionale Detailansicht aus den Figuren 3 und 4, wobei eine in die Aufnahmevorrichtung 104 eingesetzte Dosiereinheit 140 dargestellt ist. Diese befindet sich in der Dosierstellung und demzufolge über dem Zielgefäss 132. Ferner ist erkennbar, dass die Antriebsvorrichtung 103 über die Antriebswelle 107 mit der Dosiereinheit 140 gekoppelt ist. Infolgedessen lässt sich mit der Antriebsvorrichtung 103 ein nicht dargestelltes Dosierventil der Dosiereinheit 140 bedienen.

Wie bereits in der Beschreibung von Figur 2 erwähnt, ist an der Dosiereinheit 140 eine Führungsschiene 142 ausgebildet. Die Führungsschiene 142 weist ferner eine Mulde 541 auf, in welche bei in den Halteplatz 121 eingesetzter Dosiereinheit 140 das in der Figur 5A beschriebene Einrastelement 525 eingreift. Dies ist deshalb notwendig, da die Dosiereinheit 140 oder Funktionseinheit 440, 441 beim Einsetzen in den Halteplatz 121 aus der Aufnahmevorrichtung 104 herausgelöst werden muss und dies aufgrund der Reibungsverhältnisse einen gewissen Widerstand erfordert. Zudem sichert das Einrastelement 525 die Dosiereinheit 140 vor einem unkontrollierten Herausfallen aus dem Halteplatz 121.

Die Figur 5B zeigt ferner eine Windschutzabdeckung 560, welche an der Aufnahmevorrichtung 104 festgelegt ist. Ein Teil der Dosiervorrichtung 140 ragt durch eine an der Windschutzabdeckung 560 ausgebildete Öffnung, wobei die Kontur der Öffnung der Kontur dieses Teils derart angepasst ist, dass die Öffnung bei in die Aufnahmevorrichtung 104 eingesetzter Dosiereinheit 140 nahezu abgeschlossen ist. Die Windschutzabdeckung 560 liegt in der Dosierstellung der Dosiervorrichtung auf dem Windschutz 203 auf. Damit die Windschutzabdeckung 560 und/oder der Windschutz 203 infolge der vertikalen Bewegung der Wechselvorrichtung nicht beschädigt werden, kann die Dosiervorrichtung mit einem geeigneten Sensor ausgerüstet sein, welcher ein Signal an die Steuerung der Wechselvorrichtung sendet, sobald sich der Windschutz 203 und die Windschutzabdeckung 560 berühren.

Sofern die erfindungsgemässe Dosiervorrichtung in einer grösseren Anlage integriert ist, kann es sinnvoll sein, die Bestückung des Halteplatzes 121 beziehungsweise der Halterung, mittels einer in Figur 5B nur teilweise dargestellten Beschickungsvorrichtung durchzuführen. Zu diesem Zwecke ist an der Dosiereinheit 140 oder Funktionseinheit 440, 441 mindestens eine Greiferkuppelstelle 542 ausgebildet. Die Beschickungsvorrichtung, beispielsweise ein Industrieroboter, weist einen Greifer 550 auf, welcher in die Greiferkuppelstelle 542 eingreifen kann, so dass die Dosiereinheit 140 oder Funktionseinheit 440, 441 kraftschlüssig und/oder formschlüssig mit der Beschickungsvorrichtung verbindbar ist. Vorzugsweise ist die Beschickungsvorrichtung zur Dosiervorrichtung unabhängig angeordnet. Sinnvollerweise erfolgt die Bestückung des Halteplatzes 121 mit einer Dosiereinheit 140 oder Funktionseinheit 440, 441 mittels einer zum Grundrahmen hin gerichteten, horizontalen Bewegung, da keinerlei Bauteile der Dosiervorrichtung diese Richtung behindern. Selbstverständlich müssen der Halteplatz 121 beziehungsweise die Halterungsnuten 122 dahingehend ausgebildet sein, dass eine Beschickung aus dieser Richtung, sozusagen "von Vorne" möglich ist.

Figur 6 zeigt eine in den Halteplatz 121 einer Halterung eingesetzte Dosiereinheit 140, in der Aufsicht gemäss der in Figur 1 angegebenen Ebene A-A. Um eine ausserordentlich kompakte Bauweise der Dosiereinheit 140 oder Funktionseinheit, des Halteplatzes 121 und der Aufnahmevorrichtung zu ermöglichen, bietet es sich an, dass die Träger 105 der Aufnahmevorrichtung in den Halteplatz 121 hineingreifen können. Dies ist dann möglich, wenn die Dosiereinheit 140 oder Funktionseinheit zwischen einem vertikal angeordneten inneren Ebenenpaar Y, Y' und einem äusseren Ebenenpaar X, X' angeordnet ist. In jeder Ebene des inneren Ebenenpaars Y, Y' sind beispielsweise je zwei übereinander ausgebildete Auflagestellen 143 sowie eine Greiferkuppelstelle 542 angeordnet. Jede Ebene des äusseren Ebenenpaars X, X' weist je eine Führungsschiene 142 auf. Dementsprechend sind auch die Aufnahmevorrichtung und die Halteplätze 121 ausgestaltet, wobei die Halterungsnuten 122 je in einer Ebene des äusseren Ebenenpaars X, X' angeordnet sind. In jeder Ebene des inneren Ebenenpaars Y, Y' sind je zwei übereinander ausgebildete Träger 105 der Aufnahmevorrichtung angeordnet. Ferner ist der Greifer 550 auf die in der inneren Ebene angeordnete Greiferkuppelstelle 542 angepasst. In Abwandlung zur Figur 5B ist die Windschutzabdeckung 660 in Figur 6 nicht mit der Aufnahmevorrichtung, sondern mit der Dosiereinheit 140 gekoppelt. Selbstverständlich kann der Windschutz 203 statt am Gehäuse 102 auch an der Windschutzabdeckung 560 der Aufnahmevorrichtung 104 beziehungsweise an der Windschutzabdeckung 660 der Dosiereinheit 140 angeordnet sein.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele wie beispielsweise die Windschutzabdeckung miteinander kombiniert und/oder einzelne Funktionseinheiten der Ausführungsbeispiele ausgetauscht werden. Insbesondere kann die Anordnung der Träger, der Auflagestellen, der Führungsnuten und der Führungsschienen auf dem inneren und äusseren Ebenenpaar nach dem Belieben des Fachmannes erfolgen. Gegebenenfalls kann dadurch eine Codierung erreicht werden, so dass Funktionseinheiten und Dosiereinheiten in unterschiedliche, jeweils ausschliesslich für sie vorgesehene Stellplätze eingesetzt werden können. Ferner ist auch denkbar, dass mehrere Aufnahmevorrichtungen und mehrere Antriebsvorrichtungen an einer Wechselvorrichtung angeordnet sind. Die Dosiervorrichtung kann auch mehrere unabhängig voneinander betreibbare Wechselvorrichtungen mit je einer Aufnahmevorrichtung und einer Antriebsvorrichtung aufweisen. Dementsprechend werden solche Kombinationen und Alternativen als Teil der Erfindung betrachtet.

### Bezugszeichenliste

- 400, 300, 100: Dosiervorrichtung
- 401, 101: Grundrahmen
- 102: Gehäuse
- 103: Antriebsvorrichtung
- 104: Aufnahmevorrichtung
- 105: Träger
- 106: Vorsprung
- 107: Antriebswelle
- 110: Wechselvorrichtung
- 111: vertikale Linearführung
- 112: horizontale Linearführung
- 420, 120: Halterung
- 321, 121: Halteplatz
- 122: Halterungsnut
- 123: Übergabestelle
- 130: Wägezelle
- 131: Lastaufnehmer
- 132: Zielgefäss
- 133: Kraftübertragungsglied
- 140: Dosiereinheit
- 141: Ausnehmung
- 142: Führungsschiene
- 143: Auflagestelle
- 201: erster Pfeil
- 202: zweiter Pfeil
- 203: Windschutz
- 320: Zwischenhalterung
- 322: Durchgangsposition
- 390: Auffangschale
- 424: Längsführung
- 441, 440: Funktionseinheit
- 442: Vorratsgefäss
- 443: Versorgungsleitung
- 450: Reinigungsvorrichtung
- 524, 523: Seitenwand
- 525: Einrastelement
- 541: Mulde
- 542: Greiferkuppelstelle
- 550: Greifer
- 660, 560: Windschutzabdeckung

## Patentansprüche

1. Dosiervorrichtung (100, 300, 400) mit einem Grundrahmen (101,401), mit mindestens einer Aufnahmevorrichtung (104) zur Aufnahme einer, in die Aufnahmevorrichtung (104) einsetzbaren Dosiereinheit (140) oder Funktionseinheit (440, 441) und mit mindestens einer Antriebsvorrichtung (103), die mit einer in der Aufnahmevorrichtung (104) eingesetzten Dosiereinheit (140) oder Funktionseinheit (440, 441) koppelbar ist, sowie, bezogen auf die Betriebsstellung der Dosiervorrichtung (100, 300, 400), mit einer in einer oberen horizontalen Ebene des Grundrahmens (101, 401) angeordneten Halterung (120, 420) mit mehreren horizontal nebeneinander angeordneten Halteplätzen (121, 321) für Dosiereinheiten (140) oder Funktionseinheiten (440, 441), wobei die . Halteplätze relativ zum Grundrahmen (101,401) horizontal verschiebbar sind, und mit einer in einer unteren horizontalen Ebene des Grundrahmens (101) angeordneten Wägezelle (130), welche einen Lastaufnehmer (131) zur Aufnahme eines Zielgefässes (132) aufweist, **dadurch gekennzeichnet, dass** jeder Halteplatz (121, 321) relativ zum Grundrahmen (101, 401) horizontal zu einer Übergabestelle (123) verschiebbar ist, die Dosiervorrichtung (100, 300, 400) eine Wechselvorrichtung (110) beinhaltet, mittels welcher die Aufnahmevorrichtung (104) relativ zum Grundrahmen (101, 401) derart horizontal verschiebbar ist, dass an der Übergabestelle (123) mittels der Aufnahmevorrichtung (104) durch die horizontale Verschiebung eine Dosiereinheit (140) oder Funktionseinheit (440, 441) aus dem ihr zugeordneten Halteplatz (121, 321) entfernbar und in die Aufnahmevorrichtung (104) aufnehmbar beziehungsweise aus der Aufnahmevorrichtung (104) entfernbar und in den ihr zugeordneten Halteplatz (121, 321) aufnehmbar ist und mittels welcher Wechselvorrichtung (110) die Aufnahmevorrichtung (104) zusammen mit der Antriebsvorrichtung (103) relativ zum Grundrahmen (101, 401) vertikal, zur Einfüllöffnung eines auf dem Lastaufnehmer (131) aufgelegten Zielgefässes (132) hin, beziehungsweise von der Einfüllöffnung des Zielgefässes (132) zum ihr zugeordneten Halteplatz (121, 321) hin, verschiebbar ist.

2. Dosiervorrichtung (100, 300, 400) nach Anspruch 1, **dadurch gekennzeichnet, dass** der mindestens eine Halteplatz (121, 321) mindestens zwei Halterungsnuten (122) beinhaltet und die Aufnahmevorrichtung (104) mindestens zwei Träger (105) aufweist, wobei an der Dosiereinheit (140) oder Funktionseinheit (440, 441) zu den Trägem (105) passende Auflagestellen (143) und zu den Halterungsnuten (122) passende Führungsschienen (142) ausgebildet sind.

3. Dosiervorrichtung (100, 300, 400) nach Anspruch 2, **dadurch gekennzeichnet, dass** die Dosiereinheit (140) oder Funktionseinheit (440, 441) zwischen einem vertikal angeordneten inneren und äusseren Ebenenpaar (X, X', Y, Y') angeordnet ist, wobei jede Ebene des inneren Ebenenpaars (Y, Y') je mindestens eine Auflagestelle (143) und jede Ebene des äusseren Ebenenpaars (X, X') je mindestens eine Führungsschiene (142) aufweist.

4. Dosiervorrichtung (100, 300, 400) nach Anspruch 2 oder 3, **dadurch gekennzeichnet, dass** an der Dosiereinheit (140) oder Funktionseinheit (440, 441) mindestens eine Greiferkuppelstelle (542) ausgebildet ist, mittels welcher Greiferkuppelstelle (542) die Dosiereinheit (140) oder Funktionseinheit (440, 441) mit einem Greifer (550) einer zur Dosiervorrichtung (100, 300, 400) unabhängig angeordneten Beschickungsvorrichtung verbindbar ist.

5. Dosiervorrichtung (100, 300, 400) nach einem der Ansprüche 2 bis 4, **dadurch gekennzeichnet, dass** zwischen mindestens einer Halterungsnut (122) und einer Führungsschiene (142) und/oder zwischen mindestens einem Träger (105) und einer Auflagestelle (143) ein durch Krafteinwirkung lösbares Einrastelement (525) angeordnet ist.

6. Dosiervorrichtung (100, 300, 400) nach einem der Ansprüche 2 bis 5, **dadurch gekennzeichnet, dass** die mindestens eine Halterungsnut (122) und/oder Auflagestelle (143) eine, orthogonal zu ihrer Längsachse und sich im Wesentlichen in vertikaler Richtung erstreckende Ausnehmung (141) aufweist und an der mindestens eine Führungsschiene (142) und/oder am Träger (105) ein, orthogonal zu seiner Längsachse und sich im Wesentlichen in vertikaler Richtung erstreckender Vorsprung (106) ausgebildet ist, wobei zum Trennen der Dosiereinheit (140) oder Funktionseinheit (440, 441) von der Aufnahmevorrichtung (104) und/oder vom mindestens einen Halteplatz (121, 321) eine vertikale Entriegelungsbewegung, beziehungsweise zum Einsetzen der Dosiereinheit (140) oder Funktionseinheit (440, 441) in die Aufnahmevorrichtung (104) und/oder in den mindestens einen Halteplatz (121, 321) eine vertikale Absetzbewegung erforderlich ist.

7. Dosiervorrichtung (100, 300, 400) nach einem der Ansprüche 1 bis 6, **dadurch gekennzeichnet, dass** diese einen den Lastaufnehmer (131) umgebenden Windschutz (203) aufweist, wobei der Windschutz (203) in Richtung der oberen horizontalen Ebene des Grundrahmens (101, 401) und demzufolge gegen oben zumindest partiell offen ist.

8. Dosiervorrichtung (100, 300, 400) nach Anspruch 7, **dadurch gekennzeichnet, dass** an der Aufnahmevorrichtung (104) eine Windschutzabdeckung (560) angeordnet ist, mittels welcher der nach oben offene Windschutz (203) verschliessbar ist, wobei die Windschutzabdeckung (560) mit einem Durchbruch für einen an der Dosiereinheit (140) oder Funktionseinheit (440, 441) ausgebildeten Ausiass versehen ist.

9. Dosiervorrichtung (100, 300, 400) nach Anspruch 7, **dadurch gekennzeichnet, dass** an der Dosiereinheit (140) oder Funktionseinheit (440, 441) eine Windschutzabdeckung (660) angeordnet ist, mittels welcher der nach oben offene Windschutz (203) verschliessbar ist.

10. Dosiervorrichtung (100, 300, 400) nach Anspruch 7, **dadurch gekennzeichnet, dass** die Kontur der Öffnung des partiell nach oben offenen Windschutzes (203) auf denjenigen Querschnitt der Dosiereinheit (140) oder Funktionseinheit (440, 441) angepasst ist, welcher während eines Dosiervorgangs in dieser Öffnung angeordnet ist.

11. Dosiervorrichtung (100, 300, 400) nach einem der Ansprüche 1 bis 10, **dadurch gekennzeichnet, dass** am Grundrahmen (101, 401) eine Reinigungsvorrichtung (450) zur Reinigung der Dosiereinheit (140) oder Funktionseinheit (440, 441) angeordnet ist.

12. Dosiervorrichtung (100, 300, 400) nach einem der Ansprüche 1 bis 11, **dadurch gekennzeichnet, dass** die Halterung (420) mehrere in einer horizontalen Ebene und linear nebeneinander angeordnete Halteplätze (121) für Dosiereinheiten (140) und/oder Funktionseinheiten (440, 441) aufweist, wobei jeder Halteplatz (121) relativ zum Grundrahmen (401) und zu einer definierten, zum Grundrahmen (401) fixen Übergabestelle linear horizontal verschiebbar angeordnet ist.

13. Dosiervorrichtung (100, 300, 400) nach einem der Ansprüche 1 bis 11, **dadurch gekennzeichnet, dass** die Halterung (120) mehrere in einer horizontalen Ebene und ringförmig nebeneinander angeordnete Halteplätze (121) für Dosiereinheiten (140) und/oder Funktionseinheiten (440, 441) aufweist, wobei die Halterung (120) um eine vertikale Drehachse relativ zum Grundrahmen (101) drehbar ist und dadurch jeder Halteplatz (121) zu einer definierten, zum Grundrahmen (101) ortsfesten Übergabestelle drehbar ist.

14. Dosiervorrichtung (100, 300, 400) nach Anspruch 12 oder 13, **dadurch gekennzeichnet, dass** zwischen der oberen Ebene und der unteren Ebene mindestens eine Zwischenhalterung (320) in mindestens einer horizontalen Zwischenebene angeordnet ist, wobei an der mindestens einen Zwischenhalterung (320) eine Durchgangsposition (322) für die Aufnahmevorrichtung (104) ausgebildet ist.

15. Dosiervorrichtung (100, 300, 400) nach einem der Ansprüche 11 bis 14, **dadurch gekennzeichnet, dass** die Halterung (120, 420) und die Zwischenhalterung (320) frei verschiebbar oder drehbar sind, wenn sich die Aufnahmevorrichtung (104) im Bereich der unteren Ebene des Grundrahmens (101,401) befindet.

16. Dosiervorrichtung (100, 300, 400) nach einem der Ansprüche 1 bis 15, **dadurch gekennzeichnet, dass** in der mindestens einen Dosiereinheit (140) eine pulverförmige, pastenförmige oder flüssige Substanz verfüllt ist oder dass die mindestens eine Dosiereinheit (140) eine Versorgungsleitung (443) aufweist, welche mit einem Vorratsgefäss (442) und gegebenenfalls mit einer Pumpe verbunden ist.

17. Dosiervorrichtung (100, 300, 400) nach einem der Ansprüche 1 bis 16, **dadurch gekennzeichnet, dass** die Funktionseinheit (440, 441) eine Titratoreinheit, eine Pumpeinheit, eine Pipettiereinheit, eine Einheit mit Rohrleitungen und Armaturen, eine Einheit mit einem Rührwerk, eine Sensoreinheit, eine Heiz- und/oder Kühleinheit oder ein Adapter zur Aufnahme einer dieser Einheiten oder weiterer Einheiten ist.

## Claims

1. Dosage-dispensing device (100, 300, 400), comprising a base frame (101, 401), at least one receiving device (104) to receive a dosage-dispensing unit (140) or functional unit (440, 441) that is compatible to be inserted in the receiving device (104), and at least one drive mechanism (103) that is capable of being coupled to a dosage-dispensing unit (140) or functional unit (440, 441) that has been inserted into the receiving device (104), also comprising a holder (120, 420) which is arranged, relative to the operating position of the dosage-dispensing device (100, 300, 400), on an upper horizontal plane of the base frame (101, 401) and has a plurality of holding positions (121, 321) arranged horizontally side-by-side for dosage-dispensing units (140) or functional units (440, 441), wherein said holding positions are horizontally movable relative to the base frame (101, 401), and further comprising a weighing cell (130) arranged on a lower horizontal plane of the base frame (101), said weighing cell (130) having a load receiver (131) serving to receive a target container (132), **characterized in that** each holding position (121, 321) is, relative to the base frame (101, 401), horizontally movable to a transfer location (123), that the dosage-dispensing device (100, 300, 400) includes a changing mechanism (110) which enables the receiving device (104) to be shifted horizontally relative to the base frame (101, 401) in such a way that at the transfer location (123), as a result of said horizontal position shift, a dosage-dispensing unit (140) or functional unit (440, 441) can be taken out of its assigned holding position (121, 321) by means of the receiving device (104) and received into the receiving device (104) and, conversely, can be taken out of the receiving device (104) and received into the assigned holding position (121, 321), wherein by means of the changing mechanism (110) the receiving device (104) together with the drive mechanism (103) can be moved vertically relative to the base frame (101, 401) in the direction towards the fill opening of a target container (132) that has been set on the load receiver (131), as well as in the direction from the fill opening of the target container (132) towards its assigned holding position (121, 321).

2. Dosage-dispensing device (100, 300, 400) according to claim 1, **characterized in that** the at least one holding position (121, 321) comprises at least two holder grooves (122) and the receiving device (104) comprises at least two supports (105), wherein seating locations (143) that are matched to the supports (105) and guide tracks (142) that are matched to the holder grooves (122) are formed on the dosage-dispensing unit (140) or functional unit (440, 441).

3. Dosage-dispensing device (100, 300, 400) according to claim 2, **characterized in that** the dosage-dispensing unit (140) or functional unit (440, 441) is arranged between a vertically oriented inner and outer pair of planes (X, X', Y, Y'), wherein each plane of the inner pair of planes (Y, Y') contains at least one seating location (143) and each plane of the outer pair of planes (X, X') contains at least one guide track (142).

4. Dosage-dispensing device (100, 300, 400) according to claim 2 or 3, **characterized in that** there is at least one coupling location (542) for a robotic gripper formed on the dosage-dispensing unit (140) or functional unit (440, 441), wherein by means of said coupling location (542) the dosage-dispensing unit (140) or functional unit (440, 441) can be connected to a gripper (550) of a loading mechanism that is independent of the dosage-dispensing device (100, 300, 400).

5. Dosage-dispensing device (100, 300, 400) according to one of the claims 2 to 4, **characterized in that** a snap-lock element (525) which is releasable by a mechanical force is arranged between at least one holder groove (122) and a guide track (142) and/or between at least one support (105) and a seating location (143).

6. Dosage-dispensing device (100, 300, 400) according to one of the claims 2 to 5, **characterized in that** the at least one holder groove (122) and/or seating location (143) comprises a recess (141) extending essentially in the vertical direction and orthogonal to the longitudinal axis of the holder groove or seating location, while on the at least one guide track (142) and/or on the support (105) a projection (106) is formed which extends essentially in the vertical direction and orthogonal to the longitudinal axis of the guide track or the support, wherein a vertical unlocking movement is required in order to separate the dosage-dispensing device (140) or functional unit (440, 441) from the receiving device (104) and/or from the at least one holding position (121, 321), and wherein, conversely, a vertical set-down movement is required to set the dosage-dispensing unit (140) or functional unit (440, 441) into the receiving device (104) and/or into the at least holding position (121, 321).

7. Dosage-dispensing device (100, 300, 400) according to one of the claims 1 to 6, **characterized in that** the dosage-dispensing device comprises a draft shield (203) surrounding the load receiver (131), wherein said draft shield (203) is at least partially open in the direction towards the upper horizontal plane of the base frame (101, 401), i.e. towards the top.

8. Dosage-dispensing device (100, 300, 400) according to claim 7, **characterized in that** a draft shield cover (560) is arranged on the receiving device (104), whereby the open top of the draft shield (203) can be closed off, wherein said draft shield cover (560) comprises a cutout for an outlet that is formed on the dosage-dispensing unit (140) or functional unit (440, 441).

9. Dosage-dispensing device (100, 300, 400) according to claim 7, **characterized in that** a draft shield cover (660) is arranged on the dosage-dispensing unit (140) or functional unit (440, 441), whereby the open top of the draft shield (203) can be closed off.

10. Dosage-dispensing device (100, 300, 400) according to claim 7, **characterized in that** the contour of the opening of the draft shield (203) that is partially open at the top is matched to the profile of that part of the dosage-dispensing unit (140) or functional unit (440, 441) which is located in said opening during the dosage-dispensing process.

11. Dosage-dispensing device (100, 300, 400) according to one of the claims 1 to 10, **characterized in that** a cleaning device (450) is arranged on the base frame (101, 401) for the cleaning of the dosage-dispensing unit (140) or functional unit (440, 441).

12. Dosage-dispensing device (100, 300, 400) according to one of the claims 1 to 11, **characterized in that** the holder (420) comprises a plurality of holding positions (121) for dosage-dispensing units (140) and/or functional units (440, 441) arranged side-by-side in a linear array in a horizontal plane, wherein each holding position (121) is arranged with the capability of linear horizontal movement relative to the base frame (401) and to a defined transfer location which occupies a fixed place on the base frame (401).

13. Dosage-dispensing device (100, 300, 400) according to one of the claims 1 to 11, **characterized in that** the holder (120) has a plurality of holding positions (121) for dosage-dispensing units (140) and/or functional units (440, 441) arranged adjacent to each other in a ringshaped configuration in a horizontal plane, wherein the holder (120) can turn relative to the base frame (101) about a vertical axis of rotation, so that every holding position (121) can be moved to a defined transfer location which is fixed relative to the base frame (101).

14. Dosage-dispensing device (100, 300, 400) according to claim 12 or 13, **characterized in that** at least one intermediate holder (320) is arranged in at least one intermediate horizontal plane between the upper plane and the lower plane, wherein a transit position (322) for the receiving device (104) is arranged on the intermediate holder (320).

15. Dosage-dispensing device (100, 300, 400) according to one of the claims 11 to 14, **characterized in that** the holder (120, 420) and the intermediate holder (320) are free to shift sideways or turn when the receiving device (104) is in the area of the lower plane of the base frame (101, 401).

16. Dosage-dispensing device (100, 300, 400) according to one of the claims 1 to 15, **characterized in that** the at least one dosage-dispensing unit (140) is filled with a substance in the form of a powder, paste or liquid or that the at least one dosage-dispensing unit (140) has a supply conduit (443) which is connected to a reservoir container (442) and, depending on the case at hand, to a pump.

17. Dosage-dispensing device (100, 300, 400) according to one of the claims 1 to 16, **characterized in that** the functional unit (440, 441) is a titrator unit, a pump unit, a pipetting unit, a unit with pipe conduits and armatures, a unit with a stirrer device, a sensor unit, a heating- and/or cooling unit, or an adapter to receive one of said units or other units.

## Revendications

1. Dispositif de dosage (100, 300, 400) comprenant un cadre de base (101, 401), au moins un dispositif de réception (104) pour la réception d'une unité de dosage (140) ou d'une unité fonctionnelle (440, 441) pouvant être insérée dans le dispositif de réception (104) et au moins un dispositif d'entraînement (103), qui peut être couplé avec une unité de dosage (140) ou une unité fonctionnelle (440, 441) insérée dans le dispositif de réception (104), et, par rapport à la position de service du dispositif de dosage (100, 300, 400), une fixation (120, 420) disposée dans un niveau horizontal supérieur du cadre de base (101, 401) avec plusieurs places de retenue (121, 321) disposés horizontalement les uns à côté des autres pour des unités de dosage (140) ou des unités de fonction (440, 441), les emplacements de retenue pouvant coulisser horizontalement par rapport au cadre de base (101, 401), et une cellule de pesée (130) disposée dans un plan horizontal inférieur du cadre de base (101), laquelle cellule présente un récepteur de charge (131) pour la réception d'un récipient cible (132), **caractérisé en ce que** chaque emplacement de retenue (121, 321) peut être déplacé par rapport au cadre de base (101, 401) horizontalement vers un emplacement de transfert (123), le dispositif de dosage (100, 300, 400) contenant un dispositif de remplacement (110), au moyen duquel le dispositif de réception (104) peut coulisser horizontalement par rapport au cadre de base (101, 401), de telle sorte que, à l'emplacement de transfert (123), une unité de dosage (140) ou unité de fonction (440, 441) peut être enlevée de l'emplacement de retenue (121, 321) qui lui est attribué au moyen du dispositif de réception (104) par le déplacement horizontal et peut être réceptionnée dans le dispositif de réception (104) ou peut être enlevée du dispositif de réception (104) et peut être réceptionnée dans l'emplacement de retenue (121, 321) qui lui est attribué et dispositif de remplacement (110) au moyen duquel le dispositif de réception (104) peut coulisser en même temps que le dispositif d'entraînement (103) par rapport au cadre de base (101, 401) verticalement, en direction de l'ouverture d'introduction d'un récipient cible (132) posé sur le récepteur de charge (131), ou depuis l'ouverture de remplissage du récipient cible (132) en direction de l'emplacement de retenue (121, 321) qui lui est attribué.

2. Dispositif de dosage (100, 300, 400) selon la revendication 1, **caractérisé en ce que** la au moins une place de retenue (121, 321) contient au moins deux rainures de fixation (122) et le dispositif de réception (104) présente au moins deux supports (105), des emplacements de pose (143) allant avec les supports (105) et des rails de guidage (142) allant avec les rainures de fixation (122) étant réalisés sur l'unité de dosage (140) ou l'unité fonctionnelle (440, 441).

3. Dispositif de dosage (100, 300, 400) selon la revendication 2, **caractérisé en ce que** l'unité de dosage (140) ou l'unité fonctionnelle (440, 441) est disposée entre une paire de plans (X, X', Y, Y') intérieure et extérieure, disposée verticalement, chaque plan de la paire de plans intérieure (Y, Y') présentant à chaque fois au moins un emplacement de support (143) et chaque plan de la paire de plans extérieure (X, X') présentant à chaque fois au moins un rail de guidage (142).

4. Dispositif de dosage (100, 300, 400) selon la revendication 2 ou 3, **caractérisé en ce que** sur l'unité de dosage (140) ou l'unité de fonction (440, 441) est conçu au moins un emplacement de couplage de grappin (542), emplacement de couplage de grappin (542) au moyen duquel l'unité de dosage (140) ou l'unité fonctionnelle (440, 441) peut être reliée avec un grappin (550) d'un dispositif d'alimentation disposé indépendamment par rapport au dispositif de dosage (100, 300, 400).

5. Dispositif de dosage (100, 300, 400) selon l'une des revendications 2 à 4, **caractérisé en ce qu'**un élément d'encliquetage (525) pouvant être détaché par effet de force est disposé entre au moins une rainure de fixation (122) et un rail de guidage (142) et/ou entre au moins un support (105) et un point d'appui (143).

6. Dispositif de dosage (100, 300, 400) selon l'une des revendications 2 à 5, **caractérisé en ce que** la au moins une rainure de fixation (122) et/ou un emplacement d'appui (143) présente un évidement (141) s'étendant perpendiculairement à son axe longitudinal et s'étendant sensiblement dans le sens vertical et une saillie (106), s'étendant perpendiculairement à son axe longitudinal et sensiblement dans le sens vertical, étant réalisée sur le au moins un rail de guidage (142) et/ou sur le support (105), un mouvement de déverrouillage vertical étant indispensable pour la séparation de l'unité de dosage (140) ou de l'unité fonctionnelle (440, 441) du dispositif de réception (104) et/ou d'au moins un emplacement de retenue (121, 321), et/ou un mouvement de dépose vertical étant indispensable pour l'insertion de l'unité de dosage (140) ou de l'unité fonctionnelle (440, 441) dans le dispositif de réception (104) et/ou dans la au moins une place de retenue (121, 321).

7. Dispositif de dosage (100, 300, 400) selon l'une des revendications 1 à 6, **caractérisé en ce que** celui-ci présente une protection contre le vent (203) entourant le récepteur de charge (131), la protection contre le vent (203) étant au moins partiellement ouverte en direction du plan horizontal supérieur du cadre de base (101, 401) et en conséquence vers le haut.

8. Dispositif de dosage (100, 300, 400) selon la revendication 7, **caractérisé en ce que** sur le dispositif de réception (104) est disposé un revêtement de protection contre le vent (560), au moyen duquel la protection contre le vent (203) ouverte vers le haut peut être fermée, le revêtement de protection contre le vent (560) étant doté d'un passage pour une sortie conçue sur l'unité de dosage (140) ou l'unité fonctionnelle (440, 441).

9. Dispositif de dosage (100, 300, 400) selon la revendication 7, **caractérisé en ce que** sur l'unité de dosage (140) ou l'unité fonctionnelle (440, 441) est disposé un revêtement de protection contre le vent (660), au moyen duquel la protection contre le vent (203) ouverte vers le haut peut être fermée.

10. Dispositif de dosage (100, 300, 400) selon la revendication 7, **caractérisé en ce que** le contour de l'ouverture de la protection contre le vent (203) ouverte partiellement vers le haut est adapté à la section de l'unité de dosage (140) ou de l'unité fonctionnelle (440, 441), laquelle section est disposée pendant une opération de dosage dans cette ouverture.

11. Dispositif de dosage (100, 300, 400) selon l'une des revendications 1 à 10, **caractérisé en ce qu'**un dispositif de nettoyage (450) pour le nettoyage de l'unité de dosage (140) ou de l'unité fonctionnelle (440, 441) est disposé sur le cadre de base (101, 401).

12. Dispositif de dosage (100, 300, 400) selon l'une des revendications 1 à 11, **caractérisé en ce que** la fixation (420) présente plusieurs places de retenue (121) disposées les unes à côté des autres dans un plan horizontal et linéairement pour des unités de dosage (140) et/ou des unités fonctionnelles (440, 441), chaque place de retenue (121) étant disposée de façon à pouvoir coulisser linéairement et horizontalement par rapport au cadre de base (401) et à un point de transfert défini et fixe par rapport au cadre de base (401).

13. Dispositif de dosage (100, 300, 400) selon l'une des revendications 1 à 11, **caractérisé en ce que** la fixation (120) présente plusieurs places de retenue (121) disposées les unes à côté des autres dans un plan horizontal et en forme d'anneau pour des unités de dosage (140) et/ou des unités fonctionnelles (440, 441), la fixation (120) pouvant tourner autour d'un axe de rotation vertical par rapport au cadre de base (101) et chaque place de retenue (121) pouvant tourner ainsi vers un point de transfert défini et fixe par rapport au cadre de base (101).

14. Dispositif de dosage (100, 300, 400) selon la revendication 12 ou 13, **caractérisé en ce qu'**au moins une fixation intermédiaire (320) est disposée dans au moins un plan intermédiaire horizontal entre le plan supérieur et le plan inférieur, une position de passage (322) étant conçue sur la au moins une fixation intermédiaire (320) pour le dispositif de réception (104).

15. Dispositif de dosage (100, 300, 400) selon l'une des revendications 11 à 14, **caractérisé en ce que** la fixation (120, 420) et la fixation intermédiaire (320) peuvent coulisser ou tourner librement, lorsque le dispositif de réception (104) se trouve dans la zone du plan inférieur du cadre de base (101, 401).

16. Dispositif de dosage (100, 300, 400) selon l'une des revendications 1 à 15, **caractérisé en ce qu'**une substance sous forme de poudre, de pâte ou liquide est chargée dans la au moins une unité de dosage (140) ou en ce que la au moins une unité de dosage (140) présente une conduite d'alimentation (443), qui est reliée à un récipient de réserve (442) et éventuellement à une pompe.

17. Dispositif de dosage (100, 300, 400) selon l'une des revendications 1 à 16, **caractérisé en ce que** l'unité fonctionnelle (440, 441) est une unité de titrage, une unité de pompage, une unité de pipettage, une unité avec des conduites et des accessoires, une unité avec un agitateur, une unité capteur, une unité de chauffage et/ou de refroidissement ou un adaptateur pour la réception de l'une de ces unités ou d'autres unités.
